# EUROPÄISCHE PATENTSCHRIFT

(11) **EP 3 050 435 B1**
(45) Veröffentlichungstag und Bekanntmachung des Hinweises auf die Patenterteilung: **21.03.2018**
(21) Anmeldenummer: 15405006.6
(22) Anmeldetag: 27.01.2015
(51) Int. Cl.: A23G 1/00, A23G 1/54, A23G 3/34, A23G 3/54

(54) **Verfahren zur Herstellung eines mehrschichtigen Süßwarenproduktes durch Koextrusion**
Method for making a multilayer confectionary product by co-extrusion
Procédé de production d'un produit de confiserie multicouche par coextrusion

(43) Veröffentlichungstag der Anmeldung: 03.08.2016
(73) Patentinhaber: Maestrani Schweizer Schokoladen AG, 9230 Flawil (CH)
(72) Erfinder: Waldburger, Mathias, 9000 St. Gallen (CH); Osl, Sebastian, 6832 Sulz (AT)
(74) Vertreter: EGLI-EUROPEAN PATENT ATTORNEYS

(56) Entgegenhaltungen:
- WO-A2-2011/044373
- US-A1- 2007 141 198
- G Talbot: "Chocolate and couvertures: application in ice cream" In: "Science and technology of enrobed and filled chocolate, confectionery and bakery products", 1. Januar 2009 (2009-01-01), Woodhead Publishing, XP055201296, ISBN: 978-1-84-569390-9 Seite 177, * das ganze Dokument *

## Beschreibung

Die vorliegende Erfindung betrifft ein Verfahren zur Herstellung eines mehrschichtigen Süsswarenprodukts durch Koextrusion mit einem pastösen Kern aus einer wasserbasierten, Zucker und Verdickungsmittel aufweisenden Füllungsmasse und einer Ummantelung aus einer fettbasierten Füllungsmasse. Die Erfindung betrifft ferner ein derartiges Süsswarenprodukt, das insbesondere durch ein solches Verfahren hergestellt ist.

Aus dem Stand der Technik sind mitunter verschiedene Methoden und Verfahren bekannt, um mehrschichtige Süsswarenprodukte herzustellen. So werden etwa Formen mit Schokolade zur Ausbildung offener Schalen ausgegossen, die dann im Weiteren mit einer Füllungsmasse gefüllt und anschliessend mit Schokoladendeckel verschlossen werden.

Eine alternative Methode besteht im Koextrudieren des mehrschichtigen Süsswarenprodukts. Hierzu werden etwa eine Füllmasse und wenigstens eine Hüllmasse über getrennte Zuführwege einem Koextruder mit einer Koaxialdüse zugeführt. Die Koaxialdüse besitzt eine innere Öffnung sowie eine die innere Öffnung ummantelnde, ringförmige äussere Öffnung. Über die innere Öffnung wird die Füllmasse und über die äussere Öffnung die Hüllmasse zugeführt. Beim Austritt der beiden Massen aus den Öffnungen entsteht somit ein kontinuierlicher, im Wesentlichen koaxialer Strang, bei dem die Hüllmasse einen Kern aus Füllmasse umschliesst. Der Endlosstrang wird anschliessend mittels einer Schneideinrichtung in Portionseinheiten geschnitten. Das resultierende Koextrudat kann zudem nach der Schneideinrichtung mit einem Überzug, beispielsweise Schokolade, überzogen werden. Im Ergebnis erhält man ein Süsswarenprodukt mit einen Kern aus Füllungsmasse, der vollumfänglich mit der Hüllmasse ummantelt ist. Nach der Kühlung entsteht schliesslich ein formstabiles Produkt, das einer Primärverpackungsanlage zugeführt werden kann.

In diesem Sinne ist aus US 2007/0141198 A1 ein Verfahren zur Herstellung eines mindestens dreilagigen Süsswarenproduktes bekannt, das mittels eines Koextrusionsverfahrens erzeugt und nach dem Koextrudieren in Portionseinheiten geschnitten wird. Dabei sind die einzelnen Schichten derart aufeinander abgestimmt, dass entweder Öl- oder Wasserbestandteile der jeweiligen Fülllagen zwischen den einzelnen Schichten migrieren können, um dem Produkt eine über die Zeit veränderliche Konsistenz zu verleihen. Alternativ können die Füllmassen der einzelnen Lagen aber auch derart gewählt werden, dass eine Migration von Öl- oder Wasserbestandteilen zwischen den einzelnen Schichten gerade verhindert wird.

Mit Hilfe dieses Verfahrens lassen sich allerdings nur bestimmte Produkte herstellen, insbesondere nur solche mit einer nahezu festen, insbesondere schnittfesten Kernmasse, etwa mit Kaugummi oder einer feststoffartigen Fruchtfüllung. Bisher konnten mit diesem Verfahren jedoch keine mehrschichtigen Süsswarenprodukte mit einem pastösen, d.h. sehr weichen bis nahezu flüssigen Kern im Endprodukt, etwa einem pastösen Fruchtkern, hergestellt werden, der aus einer wasserbasierten, Zucker und Verdickungsmittel aufweisenden Füllungsmasse besteht. Denn hierbei tritt vordergründig das Problem auf, dass die Kernfüllmasse trotz hinreichend fester Ausgangskonsistenz nach dem Extrudieren und dem Zerschneiden des Extrusionsstrangs in Portionseinheiten sehr schnell aus den offenen Schnittenden der Portionseinheiten ausläuft. Mitunter geschieht dies noch bevor die Schnittenden in einem weiteren Schritt mit einer zusätzlichen Hülle, etwa mit einem Schokoladenüberzug, versiegelt werden können. Ausgelaufene Füllmasse beeinträchtigt jedoch nicht nur in unerwünschter Weise die Optik des fertigen Produktes, sondern führt nachteilig auch zu einer raschen Verunreinigung von Transport- und Produktionseinheiten, die der Schneideinrichtung nachgeordnet sind.

Mehrschichtige Süsswarenprodukte mit einem pastösen Kern lassen sich daher bisher etwa nur durch das eingangs beschriebene Giessverfahren herstellen, da dort die Füllmasse aus der zuvor gegossenen wannenartigen Schale, die die spätere Ummantelung des Kerns bildet, nicht auslaufen kann, bevor die Schale mit einem Schokoladendeckel verschlossen wird.

Alternativ besteht bei koextrudierten Produkten die Möglichkeiten, die durch das Portionieren entstehenden offenen Schnittenden, insbesondere den beim Zerteilen freigelegten Kern, während des eigentlichen Zerteilens des Extrusionsstrangs unmittelbar wieder zu verschliessen, indem etwa die Portioniereinrichtung derart ausgebildet ist, dass sie den Extrusionsstrang zum Portionieren an den Trennstellen zusammenquetscht. Dabei werden die den Kern umhüllenden Schichten an der Trennstelle so zusammengedrückt, dass der Kern automatisch beim Portionieren versiegelt wird. Eine solche Portioniereinrichtung ist beispielsweise aus WO 2007/130915 A2 bekannt. Dieses Verfahren nimmt jedoch deutlichen Einfluss auf die Endform der Portionseinheiten, die folglich kugelförmig oder an den Ende zumindest verjüngt oder abgerundet ausgebildet sind. Mitunter lassen sich jedoch durch dieses Verfahren keine Portionseinheiten mit im Wesentlichen geraden Enden oder gar offenen Schnittenden herstellen.

Bei der Produktion von mehrschichtigen Süsswarenprodukten treten zudem häufig Probleme bei der Kombination von fett- und wasserbasierten Füllmassen auf. So haben fettbasierte Füllmassen, etwa Schokoladenfüllmassen, einen Wasseranteil von unter einem Prozent. Bringt man eine solche fettbasierte Masse mit einer wasserbasierten Füllungsmasse in Kontakt, so kann die fettbasierte Füllungsmasse schon bei einem nur geringfügigen Anstieg des Wassergehalts aushärten bzw. unerwünschte Fett- und Zuckerreifeffekte aufweisen. Um dies zu verhindern, können beispielsweise wie in US 2007/0141198 A1 zwischen benachbarten fett- und wasserbasierten Fülllagen Zwischenschichten integriert werden, deren Eigenschaften so abgestimmt sind, dass eine Migration von Öl- oder Wasserbestandteilen zwischen den fett- und wasserbasierten Schichten verhindert wird. Ein solches Produkt ist jedoch wegen der zusätzlichen Zwischenschicht sehr aufwändig in der Herstellung.

Aus der WO 2011/044373 A2 ist ein Verfahren zur Herstellung einer mehrschichtigen Konfektzusammensetzung bekannt, das ein Koextrudieren einer ersten Süsswaren-Zusammensetzung mit einer zweiten Süsswaren-Zusammensetzung umfasst, um einen kontinuierlichen mehrschichtigen Strang aus mindestens einer Schicht der ersten Süsswaren-Zusammensetzung und mindestens einer Schicht der zweiten Süsswaren-Zusammensetzung zu bilden, wobei anschliessend der mehrschichtige Strang bemessen wird und in Stücke getrennt wird.

Aus dem Buch "Science and technology of enrobed and filled chocolate, confectionery and bakery products", 1. Januar 2009, Woodhead Publishing, XP055201296, ISBN: 978-1-84-569390-9 ist auf Seite 177 von G. Talbot zum Thema "Chocolate and couvertures: application in ice cream" die Aussage bekannt, dass Schokolade und Eiskrem koextrudiert werden können.

Aus der US 2007/0141198 A1 ist ein Verfahren zum Herstellen mehrschichtiger Süsswarenprodukte bekannt, bei dem drei unterschiedliche Süsswarenkomponenten koextrudiert werden. Nach der Extrusion erfolgt durch Migration von Wasser oder Öl zwischen den Schichten eine Veränderung der Textur der jeweiligen Schichten, was durch die Einstellung des Wassergehalts, der Wasseraktivität oder des Ölgehalts gesteuert wird.

Aufgabe der vorliegenden Erfindung ist es, ein Verfahren zur Herstellung eines mehrschichtigen Süsswarenproduktes durch Koextrusion mit einem pastösen Kern aus einer wasserbasierten, Zucker und Verdickungsmittel aufweisenden Füllungsmasse und einer Ummantelung aus einer fettbasierten Füllungsmasse anzugeben, das es erlaubt, den Extrusionsstrang in Portionseinheiten mit offenen Schnittenden zur zerteilen, ohne dass der pastöse Kern zumindest bis zu einer nachfolgenden Versiegelung aus den offenen Schnittenden der Portionseinheiten ausläuft. Ferner sollen unerwünschte Fett- und Zuckerreifeffekte möglichst vermeiden werden.

Diese Aufgabe wird durch ein Verfahren nach Anspruch 1 sowie ein Süsswarenprodukt nach Anspruch 13 gelöst. Vorteilhafte Ausgestaltungen der Erfindungen sind Gegenstand der abhängigen Ansprüche.

Gemäss der Erfindung zeichnet sich das Verfahren durch folgende Schritte aus:
a) Zuführen wenigstens einer wasserbasierten, Zucker und Verdickungsmittel aufweisenden Füllungsmasse mit einer relativen Dichte im Bereich von 70° Brix bis 85° Brix, gemessen bei 20°C, sowie wenigstens einer fettbasierten Füllungsmasse zu einem Koextruder;
b) Koextrudieren der wasserbasierten Füllungsmasse und der fettbasierten Füllungsmasse zu einem im Wesentlichen koaxialen Endlosstrang, bei dem die wasserbasierte Füllungsmasse einen pastösen Kern bildet, der von der fettbasierten Füllungsmasse ummantelt ist, wobei das Zuführen zum Koextruder und das Koextrudieren mittels des Koextruders unter Minimierung von Scherstresseinwirkungen derart erfolgen, dass die pastöse Füllungsmasse nach dem Koextrudieren wenigstens noch eine solche Viskosität aufweist, die gemäss einer Messung bei 20°C mit einem Bostwick-Viskosimeter einer Fliessstrecke von weniger als 3 cm nach 20 min. entspricht, wobei die Minimierung von Scherstresseinwirkungen beinhaltet, dass die wasserbasierte Füllungsmasse dem Koextruder über einen ersten Teil eines Zuführweges mittels Druckluft und/oder schwerkraftgetrieben zugeführt wird und über einen zweiten Teil des Zuführweges mittels einer Pumpe zugeführt wird und, dass die fettbasierte Füllungsmasse dem Koextruder über einen ersten Teil eines Zuführweges mittels Druckluft und/oder schwerkraftgetrieben zugeführt wird und über einen zweiten Teil des Zuführweges mittels einer Pumpe zugeführt wird;
c) Kühlen des Endlosstrangs zur Formstabilisierung der ummantelnden fettbasierten Füllungsmasse;
d) Portionieren des gekühlten Endlosstrangs mittels einer Schneideinrichtung in Portionseinheiten mit offenen Schnittenden.

In erfindungsgemässer Weise wurde erkannt, dass die zum Erreichen einer pastösen Kernfüllung im Endprodukt vorgesehenen wasserbasierten, zuckerhaltigen und mit Verdickungsmitteln verfestigten Füllungsmassen nur bedingt den Scherstresseinwirkungen während des Zuführens und des Koextrudierens standhalten. Mitunter führen die Scherstresseinwirkungen zu irreversiblen Veränderungen der Fliesseigenschaften der mit Verdickungsmitteln verfestigten Füllungsmasse, die zu dem beobachteten Auslaufen der Kernfüllung nach dem Portionieren führen. So wird beispielsweise bei Füllungsmassen, die Pektin als Verdickungsmittel enthalten, durch Scherstresseinwirkung die für die Verfestigung der Füllungsmasse massgebende Pektinstruktur zum Teil irreversibel gestört.

Entsprechend wurde erkannt, dass die wasserbasierte Füllungsmasse derart beschaffen sein und das Zuführen und Koextrudieren der wasserbasierten Füllungsmasse derart erfolgen muss, dass die Kernfüllung nach dem Koextrudieren zwar einerseits eine permanente pastöse Konsistenz aufweist, andererseits gleichzeitig aber eine untere Viskositätsgrenze nicht unterschreitet, die einer Bostwick-Viskosität von höchstens 3 cm in 20 min. bei 20°C entspricht, d.h. gemäss einer Messung bei 20°C mit einem Bostwick-Viskosimeter einer Fliessstrecke von höchstens 3 cm nach 20 min. entspricht.

Die Bestimmung der Viskosität mit einem Bostwick-Viskosimeter ist eine übliche Viskositätsmessung für flüssigviskose Lebensmittelprodukte. Dabei handelt es sich um ein physikalisches Vergleichsverfahren, bei dem der Fliessweg als Vergleichsgrösse für die Viskosität verwendet wird. Dabei werden vorliegend etwa 30 g der zu untersuchenden Probe in den Messkanal des Bostwick-Viskosimeters eingefüllt und die zurückgelegte Distanz in Zentimeter innerhalb einer Zeit von 20 Minuten bei einer Temperatur von 20°C bestimmt.

Wenn als geeignete Massnahme zum Zuführen der wasserbasierten Füllungsmasse vorgesehen ist, dass diese dem Koextruder zumindest über einen ersten Teil eines Zuführweges mittels Druckluft und/oder schwerkraftgetrieben zugeführt wird, ist die Art der Zuführung besonders schonend und verursacht nur minimale Scherstresseinwirkungen auf die sich ausbildende Struktur innerhalb der mit Verdickungsmitteln verfestigten Füllungsmasse. Es ist vorgesehen, dass die wasserbasierte Füllungsmasse dem Koextruder zumindest über einen zweiten Teil des Zuführweges mittels einer Pumpe zugeführt wird, wobei der Pumpvorgang in vorteilhafter Weise ebenfalls möglichst schonend mit minimaler Scherstresseinwirkung erfolgen sollte.

Es ist vorgesehen, dass die fettbasierte Füllungsmasse dem Koextruder über einen ersten Teil eines Zuführweges mittels Druckluft und/oder schwerkraftgetrieben zugeführt wird und dass die fettbasierte Füllungsmasse dem Koextruder über einen zweiten Teil eines Zuführweges mittels einer Pumpe zugeführt wird.

In erfindungsgemässer Weise wurde erkannt, dass ein gewisses Mass an Scherstresseinwirkungen durchaus zulassbar ist, mitunter also das Koextrudieren eines Endlosstrangs mit pastösem Kern unerwarteter Weise nicht ausgeschlossen, sondern vielmehr möglich ist, und dass es hierfür ausreicht, wenn der pastöse Kern nach dem Extrudieren noch wenigstens die oben angegebene Restviskosität aufweist, um zu gewährleisten, dass die pastöse Kernfüllung nach dem Zerschneiden in Portionseinheiten zumindest bis zu einer nachfolgenden Versiegelung aus den offenen Schnittenden nicht ausläuft.

Dies wird zum einen durch eine geeignete, scherstressminimierte Ausgestaltung des Zuführ- und Koextrusionsprozesses erreicht, wobei die konkrete Ausgestaltung des Zuführ- und Koextrusionsprozesses produktabhängig ist, d.h. massgebend von der konkret verwendeten wasserbasierten Füllungsmasse abhängt. Dabei sind der Zuführ- und der Koextrusionsprozess in vorteilhafter Weise so ausgestaltet, dass Scherstresseinwirkungen insbesondere auf die wasserbasierte Füllungsmasse minimiert sind.

Zum anderen gewährleistet die Verwendung einer wasserbasierten Füllungsmasse mit einer relativen Dichte im Bereich von 70° Brix bis 85° Brix, gemessen bei 20°C, als Ausgangsprodukt, dass der Kern des fertigen Süsswarenprodukts nach dem Koextrudieren noch pastös ist. Insoweit dient dieser Bereich der relativen Dichte zur Definition der Eigenschaft "pastös" des Kerns im Sinne dieser Erfindung. Zugleich wird durch die Verwendung einer wasserbasierten Füllungsmasse mit einer relativen Dichte in diesem Bereich in vorteilhafter Weise erreicht, dass unerwünschte Fett- und Zuckerreifeffekte möglichst vermieden werden. Darüber hinaus wird durch den Zuckergehalt der wasserbasierten Füllungsmasse bei dieser Dichte eine hinreichende mikrobiologische Stabilität des fertigen Produkts sichergestellt, die Lager- und Haltbarkeitszeiten von mehr als einem Jahr erlaubt.

Das Kühlen des Endlosstrangs nach dem Koextrudieren dient in vorteilhafter Weise zur Formstabilisierung der ummantelnden fettbasierten Füllungsmasse, damit diese beim anschliessenden Portionieren dem von aussen einwirkenden mechanischen Druck der Schneideinrichtung besser standhält und sich das Koextrudat nicht verformt. Hierzu kann es vorgesehen sein, dass der auf ein Förderband extrudiere Endlosstrang eine Kühlkammer durchläuft und dort bevorzugt mit kühler Luft beaufschlagt wird, die eine Temperatur von etwa 10°C bis 14°C aufweist.

Eine weitere vorteilhafte Massnahme zum Einhalten der unteren Viskositätsgrenze kann u.a. darin bestehen, dass das Extrudieren der wasserbasierten Füllungsmasse druckgesteuert oder druckgeregelt erfolgt. Dabei wird der Druck in vorteilhafter Weise in Abhängigkeit der konkret zu verarbeitenden Füllungsmasse so gewählt, dass das Extrudieren möglichst schonend mit minimaler Scherstresseinwirkung erfolgt. Die Steuerung bzw. Regelung hilft ausserdem, Druckschwankungen zu vermeiden, die ebenfalls Scherstress verursachen können. In gleicher Weise kann auch das Extrudieren der fettbasierten Füllungsmasse druckgesteuert oder druckgeregelt erfolgen. Insbesondere kann es vorgesehen sein, dass die wasserbasierte und die fettbasierte Füllungsmasse mit unterschiedlichen Drücken extrudiert werden.

Um ein möglichst sauberes Schnittergebnis und damit ein optisch ansprechendes und gewichtsstabiles Endprodukt zu erzielen, kann es nach einer weiteren vorteilhaften Ausführungsform der Erfindung vorgesehen sein, dass die Schneideinrichtung zum Portionieren des Endlosstrangs mittels Ultraschall, insbesondere nach jedem Schneidvorgang, gereinigt wird. Bevorzugt erfolgt das Portionieren so, dass die fertigen Süsswarenprodukte eine Länge von 25 mm bis 175 mm und/oder eine Masse von 5 g bis 50 g aufweisen.

Gemäss einer weiteren vorteilhaften Ausgestaltung der Erfindung wird der Endlosstrang auf ein Förderband extrudiert, dessen Fördergeschwindigkeit niedriger ist als die Extrusionsgeschwindigkeit des Koextruders. Hierdurch wird vermieden, dass der Extrusionsstrang beim Austreten aus dem Koextruder abreisst. Vielmehr kann auf diese Weise erreicht werden, dass der Extrusionsstrang einen homogenen Durchmesser aufweist, so dass die Portionseinheiten eine hinreichende Gewichtsstabilität aufweisen.

Um eine gute Verarbeitung der wasser- und fettbasierten Füllungsmassen zu erreichen, insbesondere um eine gute Zuführbarkeit und Extrudierbarkeit sicherzustellen, kann es nach einer weiteren Ausgestaltung der Erfindung vorgesehen sein, dass die fettbasierte Füllungsmasse vor dem Zuführen zum Koextruder auf eine Temperatur von 24°C bis 26°C, insbesondere von 24,5°C bis 25,5°C, vortemperiert wird und/oder dass die wasserbasierte Füllungsmasse vor dem Zuführen zum Koextruder auf eine Temperatur von 25°C bis 28°C, insbesondere von 26°C bis 27°C, vortemperiert wird. Vorzugsweise wird die wasserbasierte Füllungsmasse auf eine Temperatur möglichst nahe der Temperatur der dem Koextruder zugeführten fettbasierten Füllungsmasse vortemperiert. Hierdurch wird vermieden, dass eine übermässig warme wasserbasierte Füllungsmasse zu unerwünschten Schmelzprozessen in der fettbasierten Füllungsmasse führt.

Da die wasserbasierte Füllungsmasse als Ausgangsmaterial gemäss der vorliegenden Erfindung Verdickungsmittel aufweist, kann es erforderlich sein, die unter Umständen verfestigte wasserbasierte Füllungsmasse vor dem Zuführen und Extrudieren, etwa mit Hilfe eines Rührwerks umzurühren, um die Masse förderfähig zu machen. Gleiches kann auch für die fettbasierte Füllungsmasse vorgesehen sein.

Gemäss einer weiteren Ausgestaltung der Erfindung kann das Verdickungsmittel tierischen Ursprungs, insbesondere ein gelantinehaltiges Verdickungsmittel sein. Da Verdickungsmittel tierischen Ursprungs jedoch bei vielen Verbrauchern zunehmend unerwünscht sind, kann als bevorzugte Alternative ein pflanzliches, insbesondere pektinhaltiges Verdickungsmittel verwendet werden. Beide Arten von Verdickungsmitteln gewährleisten eine hinreichend hohe Verfestigung der wasserbasierten Füllungsmasse, so dass das fertige Süsswarenprodukt eine erhöhte Formstabilität aufweist.

Des Weiteren kann es vorgesehen sein, dass die fettbasierte Füllungsmasse vor dem Zuführen zum Koextruder mittels eines Inertgases aufgeschäumt wird, insbesondere auf eine Dichte von 800 g/l bis 1000 g/l. Hierdurch kann die Produktvielfalt gesteigert werden. Das Inertgas hat den Vorteil, dass es mit der fettbasierten Füllungsmasse nicht oder nahezu nicht reagiert. Hierzu eignet sich aus Kostengründen bevorzugt Stickstoff. Das Aufschäumen erfolgt in vorteilhafter Weise so, dass die Stabilität des Aufschlag- bzw. Aufschäumgrades ein nachträgliches Einmischen von stückigen Zutaten in die fettbasierte Füllungsmasse noch zulässt, wodurch die Produktvielfalt gesteigert und die Produktcharakteristik massgeblich beeinflusst werden.

Denkbar ist, dass das erfindungsgemässe Herstellungsverfahren nach dem Portionieren endet, insoweit also ein koextrudiertes, mehrlagiges Süsswarenprodukt mit einem pastösen Kern liefert, wobei das in Portionseinheiten vorliegende Endprodukt offene Schnittenden aufweist, an denen die mehreren Lagen, insbesondere der pastöse Kern, im Querschnitt zu sehen sind.

Nach einer weiteren Ausgestaltung der Erfindung kann das Verfahren jedoch ferner den Schritt des Überziehens der Portionseinheiten mit wenigstens einer ersten schokoladenhaltigen Umhüllung, insbesondere einer Umhüllung aus dunkler Schokolade, weisser Schokolade oder Milchschokolade, umfassen. Hierdurch können insbesondere die offenen Schnittenden der Portionseinheiten versiegelt werden, um ein Auslaufen des pastösen Kerns definitiv zu verhindern. Ausserdem bewirkt die Umhüllung, dass die wasserbasierte Kernfüllung gegenüber Sauerstoff in der Umgebungsluft abgeschlossen ist, wodurch Alterungs- und Schimmelprozesse unterbunden werden. Insoweit ist es von grosser Wichtigkeit, das beim Umhüllen der Portionseinheiten keine Luft, insbesondere Sauerstoff, eingeschlossen wird, da sich ansonsten in solchen Luftkammern Schimmel bilden könnte.

Ferner kann es nach einer weiteren vorteilhaften Ausführungsform der Erfindung vorgesehen sein, dass die Portionseinheiten nach dem Überziehen mit der ersten Umhüllung zumindest bereichsweise mit einer stückigen Lebensmittelpanade, insbesondere aus Fruchtgranulaten, Nussraspeln, Nusssplittern und/oder Kokosraspeln, oder einer weiteren schokoladenhaltigen Umhüllung, insbesondere einer Umhüllung aus dunkler Schokolade, weisser Schokolade oder Milchschokolade, oder mit einer stückigen Lebensmittelpanade, insbesondere aus Fruchtgranulaten, Nussraspeln, Nusssplittern und/oder Kokosraspeln, und anschliessend mit einer weiteren schokoladenhaltigen Umhüllung, insbesondere einer Umhüllung aus dunkler Schokolade, weisser Schokolade oder Milchschokolade, überzogen werden.

Die Umhüllung bzw. der Überzug können beispielsweise in einem Tauchbad oder mittels eines Flüssigvorhangs aus flüssigem Umhüllungsmaterial aufgebracht werden. Zum Verfestigen des Umhüllungsmaterials kann das Produkt erneut gekühlt werden, insbesondere mit kalter Luft an- bzw. abgeblasen werden. Hierdurch entsteht mitunter in vorteilhafter Weise ein optisch ansprechendes Wellenmuster auf der Oberfläche des umhüllten Süsswarenprodukts.

Bei einer besonders bevorzugten Ausführungsform der Erfindung beträgt der Anteil der wasserbasierten Füllungsmasse an dem fertigen Süsswarenprodukt 15-25 Gew.-% und/oder an dem koextrudierten Endlosstrang 20-30 Gew.-%.

Um eine möglichst optimale mikrobiologische Stabilität und damit Haltbarkeit des fertigen Produkts zu erreichen, weist die wasserbasierte Füllungsmasse bevorzugt einen pH-Wert zwischen 3,1 und 3,7 auf. Zur Erhöhung der Lagerfähigkeit und zur Verlängerung der Haltbarkeit des Süsswarenprodukts kann die wasserbasierte Füllungsmasse zudem ein Antioxidationsmittel aufweisen.

Nach einer weiteren Ausführungsform ist die wasserbasierte Füllungsmasse als Fruchtmasse ausgebildet. Ferner kann es im Sinne einer möglichst grossen Produktvielfalt vorgesehen sein, dass die wasserbasierte Füllungsmasse eine der folgenden Geschmacksnoten oder Kombinationen davon aufweist: Apfel, Himbeere, Erdbeere, Schwarze Johannisbeere, Açai-Beere, Sauerkirsche, Mango/Passionsfrucht, Pfirsich, Aprikose, Orange, Limette, Cranberry, Heidelbeere, Kiwi, Banane, Dörrpflaume, Karamell, Vanille, Antipasti, Honig, Salz, Pfeffer, Senf, Oliven, Tomaten und/oder Barbecue-Sauce.

Die fettbasierte Umhüllung bzw. Füllungsmasse weist gemäss einer weiteren bevorzugten Ausführungsform der Erfindung einen Fettanteil von 40% bis 46%, insbesondere von 41% bis 45%, auf. Besonders bevorzugt ist sie frei von ungehärteten Fetten. Die fettbasierte Umhüllung bzw. Füllungsmasse kann beispielsweise als Milchcreme, Nougatfüllungsmasse, Kakaocreme, Kokoscreme, Kaffeecreme, Karamellfüllung, Michkaramellfüllung, Marzipanfüllungsmasse oder Marzipancreme ausgebildet sein. Ferner ist es denkbar, dass die fettbasierte Umhüllung bzw. Füllungsmasse Fruchtstücke, Fruchtpulver, Nusssplitter, Keksraspel, Gewürze, Fruchtaromen, Fruchtextrakte, Samenpulver, Samenextrakte, Salz, Vitamine, Mineralstoffe, Koffein, Alkohol, Taurin, Zinkgluconat, und/oder Luteinester aufweist. Diese Stoffe werden bevorzugt nach einem etwaigen Aufschäumen der Masse hinzugefügt.

Ferner kann das Extrudieren, etwa durch geeignete Wahl der Extruderdüse, so ausgestaltet sein, dass der pastöse Kern aus der wasserbasierten Füllungsmasse bei einer weiteren Ausführungsform der Erfindung einen runden, ovalen, sternförmigen, herzförmigen, dreieckigen, viereckigen oder mehreckigen Querschnitt und/oder einen Durchmesser im Bereich von wenigstens 3 mm, insbesondere von 3 bis 9 mm, aufweist.

Weitere Ausführungsformen der Erfindung können in vorteilhafter Weise vorsehen, dass das koextrudierte, fertige Süsswarenprodukt eine Länge von 25 mm bis 175 mm und/oder eine Masse von 5 g bis 50 g und/oder einen Durchmesser im Bereich von 10 mm bis 20 mm und/oder einen runden, ovalen, sternförmigen, herzförmigen, dreieckigen, viereckigen oder mehreckigen Querschnitt aufweist.

Die Erfindung betrifft neben dem Verfahren ferner ein mehrschichtiges, koextrudiertes und in Portionseinheiten mit offenen Schnittenden geschnittenes Süsswarenprodukt, das insbesondere nach dem erfindungsgemässen Verfahren hergestellt sein kann. Das erfindungsgemässe Süsswarenprodukt weist einen pastösen Kern aus einer wasserbasierten, Zucker und Verdickungsmittel aufweisenden Füllungsmasse und wenigstens eine im Wesentlichen koaxiale Ummantelung aus einer fettbasierten Füllungsmasse auf, wobei die wasserbasierte Füllungsmasse im fertigen, koextrudierten Süsswarenprodukt eine relative Dichte im Bereich von 70° Brix bis 80° Brix, gemessen bei 20°C, und wenigstens eine solche Viskosität aufweist, die einer Bostwick-Viskosität von höchstens 3 cm in 20 min. bei 20°C entspricht.

Bei einer vorteilhaften Ausgestaltung des Süsswarenprodukts kann es vorgesehen sein, dass die Ummantelung aus der fettbasierten Füllungsmasse wenigstens eine schokoladenhaltige Umhüllung, insbesondere aus dunkler Schokolade, weisser Schokolade oder Milchschokolade aufweist. Vorzugsweise ist auf dieser ersten Umhüllung zusätzlich entweder
- eine weitere schokoladenhaltige Umhüllung, insbesondere aus dunkler Schokolade, weisser Schokolade oder Milchschokolade, oder
- eine stückige Lebensmittelpanade, insbesondere aus Fruchtgranulaten, Nussraspeln, Nusssplittern und/oder Kokosraspeln, oder
- eine stückige Lebensmittelpanade, insbesondere aus Fruchtgranulaten, Nussraspeln, Nusssplittern und/oder Kokosraspeln, und einer umgebenden weiteren schokoladenhaltige Umhüllung, insbesondere aus dunkler Schokolade, weisser Schokolade oder Milchschokolade, aufgebracht.

Weiterhin kann es in vorteilhafter Weise vorgesehen sein, dass bei einer besonders bevorzugten Ausführungsform des erfindungsgemässen Süsswarenprodukts der Anteil der wasserbasierten Füllungsmasse an dem fertigen Süsswarenprodukt 15-25 Gew.-% beträgt. Um eine möglichst optimale mikrobiologische Stabilität und damit Haltbarkeit des fertigen Produkts zu erreichen, weist die wasserbasierte Füllungsmasse ferner bevorzugt einen pH-Wert zwischen 3,1 und 3,7 auf. Zur Erhöhung der Lagerfähigkeit und zur Verlängerung der Haltbarkeit des Süsswarenprodukts kann die wasserbasierte Füllungsmasse zudem ein Antioxidationsmittel aufweisen.

Nach einer weiteren Ausführungsform des erfindungsgemässen Süsswarenprodukts ist die wasserbasierte Füllungsmasse als Fruchtmasse ausgebildet. Ferner kann es im Sinne einer möglichst grossen Produktvielfalt vorgesehen sein, dass die wasserbasierte Füllungsmasse eine der folgenden Geschmacksnoten oder Kombinationen davon aufweist: Apfel, Himbeere, Erdbeere, Schwarze Johannisbeere, Açai-Beere, Sauerkirsche, Mango/Passionsfrucht, Pfirsich, Aprikose, Orange, Limette, Cranberry, Heidelbeere, Kiwi, Banane, Dörrpflaume, Karamell, Vanille, Antipasti, Honig, Salz, Pfeffer, Senf, Oliven, Tomaten und/oder Barbecue-Sauce.

Die fettbasierte Umhüllung bzw. Füllungsmasse weist gemäss einer weiteren bevorzugten Ausführungsform des erfindungsgemässen Süsswarenprodukts einen Fettanteil von 40% bis 46%, insbesondere von 41% bis 45%, auf. Besonders bevorzugt ist sie frei von ungehärteten Fetten. Die fettbasierte Umhüllung bzw. Füllungsmasse kann beispielsweise als Milchcreme, Nougatfüllungsmasse, Kakaocreme, Kokoscreme, Kaffeecreme, Karamellfüllung, Michkaramellfüllung, Marzipanfüllungsmasse oder Marzipancreme ausgebildet sein. Ferner ist es denkbar, dass die fettbasierte Umhüllung bzw. Füllungsmasse Fruchtstücke, Fruchtpulver, Nusssplitter, Keksraspel, Gewürze, Fruchtaromen, Fruchtextrakte, Samenpulver, Samenextrakte, Salz, Vitamine, Mineralstoffe, Koffein, Alkohol, Taurin, Zinkgluconat, und/oder Luteinester aufweist. Diese Stoffe werden bevorzugt nach einem etwaigen Aufschäumen der Masse hinzugefügt. Insoweit kann es ausserdem vorgesehen sein, dass die fettbasierte Füllungsmasse etwa mittels eines Inertgases aufgeschäumt ist, insbesondere auf eine Dichte von 800 g/l bis 1000 g/l.

Zudem kann der pastöse Kern aus der wasserbasierten Füllungsmasse bei einer weiteren Ausführungsform des erfindungsgemässen Süsswarenprodukts einen runden, ovalen, sternförmigen, herzförmigen, dreieckigen, viereckigen oder mehreckigen Querschnitt und/oder einen Durchmesser im Bereich von wenigstens 3 mm, insbesondere von 3 bis 9 mm, aufweisen.

Weitere Ausführungsformen des erfindungsgemässen Süsswarenprodukts können in vorteilhafter Weise vorsehen, dass das koextrudierte, fertige Süsswarenprodukt eine Länge von 25 mm bis 175 mm und/oder eine Masse von 5 g bis 50 g und/oder einen Durchmesser im Bereich von 10 mm bis 20 mm und/oder einen runden, ovalen, sternförmigen, herzförmigen, dreieckigen, viereckigen oder mehreckigen Querschnitt aufweist.

Weitere Ziele, Vorteile und Anwendungsmöglichkeiten der vorliegenden Erfindung ergeben sich aus der nachfolgenden Beschreibung eines Ausführungsbeispiels anhand der Zeichnungen.

Es zeigen:
- Fig. 1: eine schematische Darstellung des Verlaufs eines Ausführungsbeispiels des erfindungsgemässen Verfahrens, und
- Fig. 2: einen Querschnitt durch ein Ausführungsbeispiel eines erfindungsgemässen Süsswarenprodukts, das nach dem Verfahren gemäss Fig. 1 hergestellt ist.

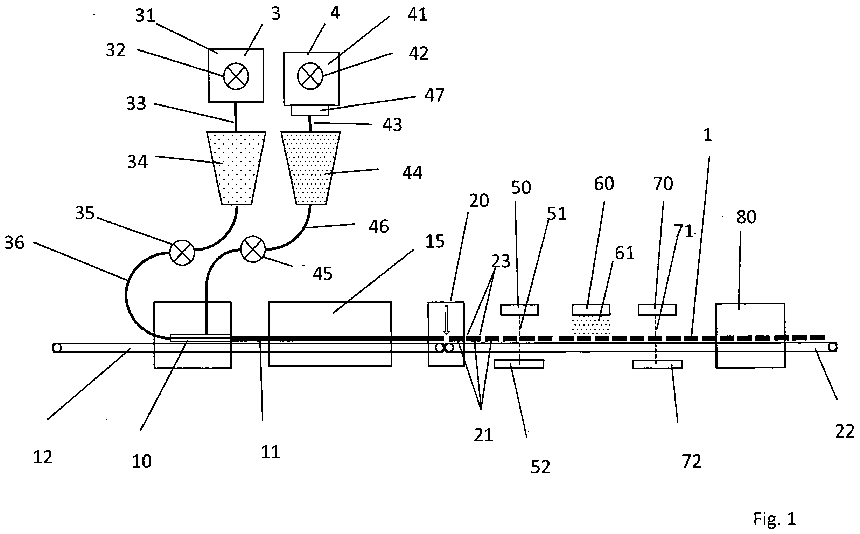

In Fig. 1 ist der Ablauf eines Ausführungsbeispiels des erfindungsgemässen Verfahrens dargestellt, das zur Herstellung eines mehrschichtigen Süsswarenproduktes (1) mittels Koextrusion dient.

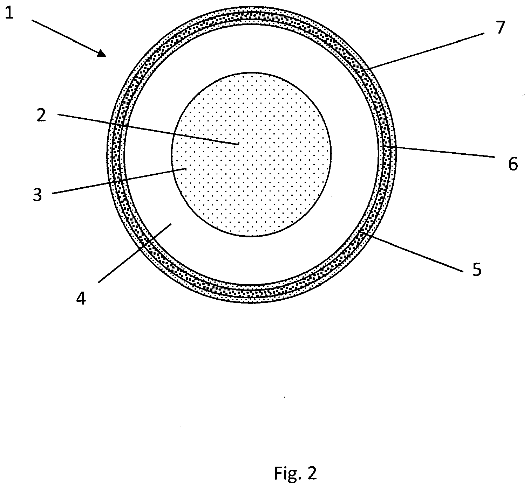

Entsprechend zeigt Fig. 2 einen Querschnitt durch ein Süsswarenprodukt 1, das mit Hilfe des Verfahrens nach Fig. 1 hergestellt wurde. Das Süsswarenprodukt 1 weist gemäss der Erfindung wenigstens einen pastösen Kern 2 aus einer wasserbasierten, Zucker und Verdickungsmittel aufweisenden Füllungsmasse 3 und eine Ummantelung aus einer fettbasierten Füllungsmasse 4 auf. Zusätzlich kann das Süsswarenprodukt 1, wie im vorliegenden Ausführungsbeispiel, eine erste schokoladenhaltige Umhüllung 5 aufweisen, auf der eine stückige Lebensmittelpanade 6, etwa aus Fruchtgranulaten, Nussraspeln, Nusssplittern und/oder Kokosraspeln, aufgebracht ist, die wiederum von einer weiteren schokoladenhaltigen Umhüllung 7 umgeben ist. Die erwünschte pastöse Konsistenz des Kerns 2 im Endprodukt wird massgeblich durch die relative Dichte der Zucker und Verdickungsmittel aufweisenden Füllungsmasse 3 bestimmt, die gemäss der Erfindung im Bereich von 70° Brix bis 85° Brix, gemessen bei 20°C, liegt.

Das Verfahren gemäss dem vorliegend in Fig. 1 gezeigten Ausführungsbeispiel beginnt mit dem Aufbereiten und Zuführen der wasserbasierten Füllungsmasse 3 und der fettbasierten Füllungsmasse 4 zu einem Koextruder 10. Hierzu befindet sich die wasserbasierte und die fettbasierte Füllungsmasse jeweils in separaten Vorratsbehältern 31, 41. Da die wasserbasierte Füllungsmasse 3 zur Erhöhung der Formstabilität des fertigen Endprodukts mit Verdickungsmitteln versehen ist und daher typischerweise im Ausgangszustand für das Verfahren in einem stark verfestigten Zustand vorliegt, kann es - wie im vorliegenden Ausführungsbeispiel - erforderlich sein, die verfestigte Füllungsmasse 3 im Vorratsbehälter 31, etwa mit Hilfe eines Rührwerks 32, aufzurühren. Dabei werden die durch das Verdickungsmittel ausgebildeten Verfestigungsstrukturen in der Füllungsmasse 3 teilweise wieder aufgelöst, wodurch sich die Viskosität der wasserbasierten Füllungsmasse 3 entsprechend reduziert. Im Ergebnis wird die Füllungsmasse 3 dadurch förderfähig. Dabei ist jedoch zu beachten, dass das Auflösen der Verfestigungsstrukturen in der Füllungsmasse 3, etwa der Pektin-Struktur bei Verwendung von Pektin als Verdickungsmittel, ein grösstenteils irreversibler Prozess ist, so dass sich die einmal aufgelösten Strukturen nach dem Aufrühren, selbst nach einer gewissen Ruhezeit nicht mehr vollständig, sondern nur noch geringfügig wieder ausbilden. Das Aufrühren der Füllungsmasse 3 kann daher massgebend - neben anderen Faktoren - die Viskosität der wasserbasierten Füllungsmasse 3 im Endprodukt bestimmen. Das Aufrühren muss daher in Sinne der vorliegenden Erfindung so schonend erfolgen, dass die wasserbasierte Füllungsmasse 3 nach dem Koextrudieren eine noch hinreichend hohe Viskosität aufweist, die einer Bostwick-Viskosität von höchstens 3 cm in 20 min. bei 20°C entspricht, d.h. die gemäss einer Messung bei 20°C mit einem Bostwick-Viskosimeter einer Fliessstrecke von höchstens 3 cm nach 20 min. entspricht. In analoger Weise kann auch im Vorratsbehälter 41 ein Rührwerk 42 vorgesehen sein, um gegebenenfalls die fettbasierte Füllungsmasse 4 aufzurühren.

Um die Zuführbarkeit und nachfolgende Verarbeitung weiter zu optimieren, werden die beiden Füllungsmassen 3, 4 in vorteilhafter Weise vortemperiert. Dies kann typischer Weise bereits in den Vorratsbehältern 31, 41 geschehen. Im vorliegenden Ausführungsbeispiel wird die fettbasierte Füllungsmasse 4 vor dem Zuführen zum Koextruder 10 auf eine Temperatur von 24°C bis 26°C, insbesondere von 24,5°C bis 25,5°C, vortemperiert. Entsprechend wird auch die wasserbasierte Füllungsmasse 3 vor dem Zuführen zum Koextruder 10 auf eine Temperatur von 25°C bis 28°C, insbesondere von 26°C bis 27°C, vortemperiert. Vorzugsweise wird die wasserbasierte Füllungsmasse 3 nahezu auf die Temperatur der dem Koextruder 10 zugeführten fettbasierten Füllungsmasse 4 gebracht. Hierdurch wird vermieden, dass eine übermässig warme wasserbasierte Füllungsmasse 3 zu unerwünschten Schmelzprozessen in der fettbasierten Füllungsmasse 4 führt.

Im Weiteren werden dann die wasserbasierte Füllungsmasse 3 und die fettbasierte Füllungsmasse 4 dem Extruder 10 über getrennte Zuführwege 33, 36 bzw. 43, 46 zugeführt. Die Zuführwege 33, 36, 43, 46 sind typischerweise als geschlossene Leitungen ausgebildet. Im vorliegenden Ausführungsbeispiel erfolgt die Zuführung der beiden Füllungsmassen 3, 4 nicht auf direktem Weg von den Vorratsbehältern 31, 41 zum Extruder 10, sondern über Zwischenbehälter 34 bzw. 44, die jeweils zwischen den Zuführwegen 33, 36 bzw. 43, 46 angeordnet sind. Die Zwischenbehälter dienen vornehmlich als Zwischenpuffer, die einen problemlosen Wechsel der Vorratsbehälter 31, 41 im laufenden Verfahren erlauben.

Darüber hinaus erlauben die Zwischenbehälter 34, 44 auch, in den Zuführwegen 33, 43 vor den Zwischenbehältern 34, 44 und in den Zuführwegen 36, 46 nach den Zwischenbehältern 34, 33 unterschiedliche Fördertechniken einzusetzen. Um nämlich eine möglichst schonende Zuführung, insbesondere der kritischen wasserbasierten Füllungsmasse 3, zu realisieren, kann es in vorteilhafter Weise - wie im vorliegenden Ausführungsbespiel - vorgesehen sein, dass die wasserbasierte Füllungsmasse 3 dem Koextruder 10 zumindest über einen Teil des gesamten Zuführweges, hier über den Zuführweg 33, mittels Druckluft und/oder schwerkraftgetrieben zugeführt wird. In dem Zuführweg 36 nach dem Zwischenbehälter 34 kann die wasserbasierte Füllungsmasse 3 dem Koextruder 10 mittels einer Pumpe 35 zugeführt werden. Die Verwendung der Pumpe 35 dient dazu, die technischen Anforderungen des Koextruders 10 an die Zuführung der zu extrudierenden Füllungsmassen 3, 4 gerecht zu werden, insbesondere den erforderlichen Druck für das Einbringen der zu extrudierenden Füllungsmassen in den Koextruder aufzubringen. In analoger Weise kann auch die fettbasierte Füllungsmasse 4 dem Koextruder 10 zumindest über einen Teil eines Zuführweges 43 mittels Druckluft und/oder schwerkraftgetrieben und über einen weiteren Teil des Zuführweges mittels einer Pumpe 45 zugeführt werden.

Weiterhin ist es im Sinne einer möglichst schonenden Zuführung der wasserbasierten Füllungsmasse 3 und der fettbasierten Füllungsmasse 4 von Vorteil, wenn die Zuführwege 33, 36, 43, 46 möglichst keine unstetigen Richtungsänderungen aufweisen. Vielmehr erfolgen etwaige Richtungsänderungen in den Zuführwegen 33, 36, 43, 46, insbesondere in den Zuführwegen 33, 36 für die wasserbasierte Füllungsmasse 3, bevorzugt über möglichst grosse Radien. Durch diese Massnahme können in vorteilhafter Weise unerwünschte Scherstresseinwirkungen auf die Füllungsmassen 3, 4 minimiert werden. In vorteilhafter Weise betragen die Radien der Zuführwege wenigstens 0,5 m.

Des Weiteren kann es wie im vorliegenden Ausführungsbeispiel vorgesehen sein, dass die fettbasierte Füllungsmasse 4 vor dem Zuführen zum Koextruder mittels eines Inertgases aufgeschäumt wird, insbesondere mit Hilfe einer Aufschäumeinheit 47. Bevorzugt hat die aufgeschäumte fettbasierte Füllungsmasse 4 eine Dichte von 800 g/l bis 1000 g/l. Hierdurch kann die Produktvielfalt gesteigert werden. Das Inertgas hat den Vorteil, dass es mit der Füllungsmasse nicht reagiert. Hierzu eignet sich aus Kostengründen bevorzugt Stickstoff. Das Aufschäumen erfolgt in vorteilhafter Weise so, dass die Stabilität des Aufschlag- bzw. Aufschäumgrades ein nachträgliches Einmischen von stückigen Zutaten in die fettbasierte Füllungsmasse 4 noch zulässt, wodurch die Produktvielfalt gesteigert und die Produktcharakteristik massgeblich beeinflusst werden.

Das Koextrudieren erfolgt gemäss der Erfindung mit Hilfe des Koextruders 10. Typischerweise weist ein solcher Koextruder 10 zwei getrennte Extrusionskammern für die beiden Füllungsmassen 3, 4 auf, die in eine gemeinsame Koaxialdüse münden. Die Koaxialdüse besitzt eine innere Öffnung sowie eine die innere Öffnung ummantelnde, ringförmige äussere Öffnung. Der inneren Öffnung wird die wasserbasierte Füllungsmasse 3 zugeführt, während der äusseren, ringförmigen Öffnung die fettbasierte Füllungsmasse 4 zugeführt wird. Beim Austritt der beiden Füllungsmassen 3, 4 aus den Öffnungen der Koaxialdüse entsteht somit ein im Wesentlichen koaxialer Endlosstrang 11, bei dem die fettbasierte Füllungsmasse 4 einen Kern 2 aus der wasserbasierten Füllungsmasse 3 umschliesst. Dabei erfolgt das Koextrudieren gemäss der Erfindung derart, dass die wasserbasierte Füllungsmasse 3 nach dem Koextrudieren wenigstens noch eine solche Viskosität aufweist, die einer Bostwick-Viskosität von höchstens 3 cm in 20 min. bei 20°C entspricht, d.h. die gemäss einer Messung bei 20°C mit einem Bostwick-Viskosimeter einer Fliessstrecke von höchstens 3 cm nach 20 min. entspricht. In vorteilhafter Weise kann hierzu das Extrudieren der wasserbasierten Füllungsmasse 3 druckgesteuert oder druckgeregelt erfolgen. Dabei wird der Druck in vorteilhafter Weise in Abhängigkeit der konkret zu verarbeitenden, wasserbasierten Füllungsmasse 3 so gewählt, dass das Extrudieren möglichst schonend mit minimaler Scherstresseinwirkung erfolgt. In gleicher Weise kann auch das Extrudieren der fettbasierten Füllungsmasse 4 druckgesteuert oder druckgeregelt erfolgen. Insbesondere kann es vorgesehen sein, dass die wasserbasierte und die fettbasierte Füllungsmassen 3, 4 mit unterschiedlichen Drücken extrudiert werden.

Der Endlosstrang 11 wird im vorliegenden Ausführungsbeispiel auf ein Förderband 12 extrudiert. Dabei ist die Fördergeschwindigkeit des Förderbands 12 in vorteilhafter Weise niedriger als die Extrusionsgeschwindigkeit des Koextruders 10. Hierdurch wird vermieden, dass der Endlosstrang 11 beim Austreten aus dem Koextruder 10 abreisst. Vielmehr wird erreicht, dass der Endlosstrang 11 einen homogenen Durchmesser aufweist, so dass eine hinreichende Gewichtsstabilität des fertigen Süsswarenproduktes 1 gewährleistet werden kann.

Auf dem Förderband 12 durchläuft der Endlosstrang 11 eine Kühleinrichtung 15. Das Kühlen dient in vorteilhafter Weise zur Formstabilisierung der ummantelnden fettbasierten Füllungsmasse 4, damit diese beim anschliessenden Portionieren dem von aussen einwirkenden mechanischen Schneiddruck besser standhält und sich das Koextrudat nicht verformt. Im vorliegenden Ausführungsbeispiel wird der Endlosstrang 11 hierzu in der Kühleinrichtung 15 mit kühler Luft beaufschlagt, die eine Temperatur von etwa 10°C bis 14°C aufweist.

Nach dem Kühlen wird der Endlosstrang 11 auf dem Förderband 12 einer Schneideinrichtung 20 zugeführt. Diese kann beispielsweise ein Portioniermesser aufweisen, das den gekühlten Endlosstrang 11 in Portionseinheiten 21 zerteilt, die dann jeweils offene Schnittenden 23 aufweisen, die - abgesehen von den Umhüllungen 5 und 7 und der Lebensmittelpanade 6 - dem in Fig. 2 gezeigten Querschnitt entsprechen. Insoweit ist es im Sinne der vorliegenden Erfindung von grosser Bedeutung, dass die wasserbasierte Füllungsmasse 3 nach dem Koextrudieren wenigstens noch eine solche Viskosität aufweist, die einer Bostwick-Viskosität von höchstens 3 cm in 20 min. bei 20°C entspricht, d.h. die gemäss einer Messung bei 20°C mit einem Bostwick-Viskosimeter einer Fliessstrecke von höchstens 3 cm nach 20 min. entspricht. Hierdurch wird in erfindungswesentlicher Weise sichergestellt, dass der pastöse Kern 2 aus der wasserbasierten Füllungsmasse 3 nicht ausläuft.
Im vorliegend gezeigten Ausführungsbeispiel werden die Portionseinheiten von dem Förderband 11 auf ein weiteres Förderband 21 umgeladen, das sich mit einer höheren Geschwindigkeit fortbewegt als das Förderband 11. Hierdurch wird eine Separierung der einzelnen Portionseinheiten 21 erreicht.

Denkbar ist, dass das erfindungsgemässe Herstellungsverfahren nach dem Portionieren endet, insoweit also ein koextrudiertes, mehrlagiges Süsswarenprodukt 1 mit einem pastösen Kern 2 liefert, wobei das in Portionseinheiten 21 vorliegende Endprodukt offene Schnittstellen 23 aufweist, an denen die mehreren Lagen, insbesondere der pastöse Kern 2, im Querschnitt zu sehen sind.

In dem vorliegenden Ausführungsbeispiel werden die Portionseinheiten 21 auf dem Förderband 22 jedoch noch einer Kuvertüre-Einrichtung 50 zugeführt, um die Portionseinheiten 21 samt offenen Schnittenden 23 mit einer schokoladenhaltigen Umhüllung 5, insbesondere aus dunkler Schokolade, weisser Schokolade oder Milchschokolade, zu überziehen. Hierzu durchlaufen die Portionseinheiten einen Flüssigvorhang 51 aus dem Umhüllungsmaterial, wobei überschüssiges Material in einer Auffangeinrichtung 52 gesammelt und der Kuvertüre-Einrichtung 50 wieder zurückgeführt wird.

Ferner kann es - wie im vorliegenden Ausführungsbeispiel - vorgesehen sein, dass die umhüllten Portionseinheiten 21 auf dem Förderband 22 im Weiteren einer Paniereinrichtung 60 zugeführt werden, in der sie mit einer stückigen Lebensmittelpanade 6, insbesondere aus Fruchtgranulaten 61, Nussraspeln, Nusssplittern und/oder Kokosraspeln, überzogen werden.

Im Anschluss daran kann es - wie im vorliegenden Ausführungsbeispiel - vorgesehen sein, dass die umhüllten und panierten Portionseinheiten 21 auf dem Förderband 22 einer weiteren Kuvertüre-Einrichtung 70 zugeführt werden, in der sie unter einem weiteren Flüssigvorhang 71 mit einer weiteren schokoladenhaltigen Umhüllung 7, insbesondere einer Umhüllung aus dunkler Schokolade, weisser Schokolade oder Milchschokolade, überzogen werden. Auch hier kann eine Auffangeinrichtung 72 analog zur Auffangeinrichtung 52 vorgesehen sein. Nach einer etwaigen Trocknungs- und oder Abkühlphase können die fertigen Süsswarenprodukte 1 schliesslich einer Primärverpackungsanlage 80 zugeführt werden.

## Patentansprüche

1. Verfahren zur Herstellung eines mehrschichtigen Süsswarenproduktes (1) mit einem pastösen Kern (2) durch Koextrusion, **gekennzeichnet durch** folgende Schritte:
a) Zuführen wenigstens einer wasserbasierten, Zucker und Verdickungsmittel aufweisenden Füllungsmasse (3) mit einer relativen Dichte im Bereich von 70° Brix bis 85° Brix, gemessen bei 20°C, sowie wenigstens einer fettbasierten Füllungsmasse (4) zu einem Koextruder (10) ;
b) Koextrudieren der wasserbasierten Füllungsmasse (3) und der fettbasierten Füllungsmasse (4) mittels des Koextruders (10) zu einem im Wesentlichen koaxialen Endlosstrang (11), bei dem die wasserbasierte Füllungsmasse (3) einen pastösen Kern (2) bildet, der von der fettbasierten Füllungsmasse (4) ummantelt ist, wobei das Zuführen zum Koextruder (10) und das Koextrudieren mittels des Koextruders (10) unter Minimierung von Scherstresseinwirkungen derart erfolgen, dass die wasserbasierte Füllungsmasse (3) nach dem Koextrudieren wenigstens noch eine solche Viskosität aufweist, die einer Bostwick-Viskosität von höchstens 3 cm in 20 min. bei 20°C entspricht, wobei die Minimierung von Scherstresseinwirkungen beinhaltet, dass die wasserbasierte Füllungsmasse (3) dem Koextruder (10) über einen ersten Teil eines Zuführweges mittels Druckluft und/oder schwerkraftgetrieben zugeführt wird und über einen zweiten Teil des Zuführweges mittels einer Pumpe zugeführt wird und, dass die fettbasierte Füllungsmasse (4) dem Koextruder (10) über einen ersten Teil eines Zuführweges mittels Druckluft und/oder schwerkraftgetrieben zugeführt wird und über einen zweiten Teil des Zuführweges mittels einer Pumpe zugeführt wird;
c) Kühlen des Endlosstrangs (11) zur Formstabilisierung der ummantelnden fettbasierten Füllungsmasse (4);
d) Portionieren des gekühlten Endlosstrangs (11) mittels einer Schneideinrichtung (20) in Portionseinheiten (21) mit offenen Schnittenden (23).

2. Verfahren nach Anspruch 1 **dadurch gekennzeichnet, dass** die Schneideinrichtung (20) zum Portionieren des Endlosstrangs mittels Ultraschall, insbesondere nach jedem Schneidvorgang, gereinigt wird.

3. Verfahren nach einem der vorhergehenden Ansprüche, **dadurch gekennzeichnet, dass** der Endlosstrang (11) auf ein Förderband (12) extrudiert wird, dessen Fördergeschwindigkeit niedriger ist als die Extrusionsgeschwindigkeit des Koextruders (10).

4. Verfahren nach einem der vorhergehenden Ansprüche, **dadurch gekennzeichnet, dass**
• die fettbasierte Füllungsmasse (4) vor dem Zuführen zum Koextruder (10) auf eine Temperatur von 24°C bis 26°C, insbesondere von 24,5°C bis 25,5°C, vortemperiert wird, und/oder dass
• die wasserbasierte Füllungsmasse (3) vor dem Zuführen zum Koextruder (10) auf eine Temperatur von 25°C bis 28°C, insbesondere von 26°C bis 27°C, vortemperiert wird, vorzugsweise auf nahezu die Temperatur der dem Koextruder (10) zugeführten fettbasierten Füllungsmasse.

5. Verfahren nach einem der vorhergehenden Ansprüche, **dadurch gekennzeichnet, dass** die fettbasierte Füllungsmasse (4) vor dem Zuführen zum Koextruder (10) mittels eines Inertgases aufgeschäumt wird, insbesondere auf eine Dichte von 800 g/l bis 1000 g/l.

6. Verfahren nach einem der vorhergehenden Ansprüche, **dadurch gekennzeichnet, dass** das Verdickungsmittel ein pflanzliches, insbesondere pektinhaltiges, Verdickungsmittel oder ein Verdickungsmittel tierischen Ursprungs, insbesondere ein gelantinehaltiges Verdickungsmittel, ist.

7. Verfahren nach einem der vorhergehenden Ansprüche, ferner **gekennzeichnet durch** das Überziehen der Portionseinheiten (21) mit wenigstens einer schokoladenhaltigen Umhüllung (5), insbesondere einer Umhüllung aus dunkler Schokolade, weisser Schokolade oder Milchschokolade.

8. Verfahren nach Anspruch 7, **dadurch gekennzeichnet, dass** die Portionseinheiten (21) nach dem Überziehen mit der Umhüllung (5) zumindest bereichsweise
• mit einer stückigen Lebensmittelpanade (6), insbesondere aus Fruchtgranulaten, Nussraspeln Nusssplittern und/oder Kokosraspeln, oder
• einer weiteren schokoladenhaltigen Umhüllung (7), insbesondere einer Umhüllung aus dunkler Schokolade, weisser Schokolade oder Milchschokolade, oder
• mit einer stückigen Lebensmittelpanade (6), insbesondere aus Fruchtgranulaten, Nussraspeln, Nusssplittern und/oder Kokosraspeln, und anschliessend mit einer weiteren schokoladenhaltigen Umhüllung (7), insbesondere einer Umhüllung aus dunkler Schokolade, weisser Schokolade oder Milchschokolade, überzogen werden.

9. Verfahren nach einem der vorhergehenden Ansprüche, **dadurch gekennzeichnet, dass** die wasserbasierte Füllungsmasse (3)
• einen pH-Wert zwischen 3,1 und 3,7 aufweist, und/oder
• ein Antioxidationsmittel aufweist, und/oder
• einen Gewichtsanteil von 15-25 Gew.-% an dem fertigen Süsswarenprodukt (1) und/oder von 20-30 Gew.-% an dem koextrudierten Endlosstrang (11) hat, und/oder
• als Fruchtmasse ausgebildet ist, und/oder
• die Geschmacksnoten Apfel, Himbeere, Erdbeere, Schwarze Johannisbeere, Açai-Beere, Sauerkirsche, Mango/Passionsfrucht, Pfirsich, Aprikose, Orange, Limette, Cranberry, Heidelbeere, Kiwi, Banane, Dörrpflaume, Karamell, Vanille, Antipasti, Honig, Salz, Pfeffer, Senf, Oliven, Tomaten, und/oder Barbecue-Sauce aufweist.

10. Verfahren nach einem der vorhergehenden Ansprüche, **dadurch gekennzeichnet, dass** die fettbasierte Füllungsmasse (4)
• einen Fettanteil von 40% bis 46%, insbesondere von 41% bis 45%, aufweist, und/oder
• als Milchcreme, Nougatfüllungsmasse, Kakaocreme, Kokoscreme, Kaffeecreme, Karamellfüllung, Michkaramellfüllung, Marzipanfüllungsmasse oder Marzipancreme ausgebildet ist, und/oder
• frei von ungehärteten Fetten ist, und/oder
• Fruchtstücke, Fruchtpulver, Nusssplitter, Keksraspel, Gewürze, Fruchtaromen, Fruchtextrakte, Samenpulver, Samenextrakte, Salz, Vitamine, Mineralstoffe, Koffein, Alkohol, Taurin, Zinkgluconat, und/oder Luteinester aufweist.

11. Verfahren nach einem der vorhergehenden Ansprüche, **dadurch gekennzeichnet, dass** der Kern (2) aus der wasserbasierten Füllungsmasse (3) einen runden, ovalen, sternförmigen, herzförmigen, dreieckigen, viereckigen oder mehreckigen Querschnitt aufweist und/oder einen Durchmesser im Bereich von wenigstens 5 mm aufweist.

12. Verfahren nach einem der vorhergehenden Ansprüche, **dadurch gekennzeichnet, dass** das Süsswarenprodukt (1)
• eine Länge von 25 mm bis 175 mm aufweist; und/oder
• eine Masse von 5 g bis 50 g aufweist; und/oder
• einen Durchmesser im Bereich von 10 mm bis 20 mm aufweist, und/oder
• einen runden, ovalen, sternförmigen, herzförmigen, dreieckigen, viereckigen oder mehreckigen Querschnitt aufweist.

13. Mehrschichtiges, koextrudiertes und in Portionseinheiten (21) mit offenen Schnittenden (23) geschnittenes Süsswarenprodukt (1), insbesondere hergestellt nach einem Verfahren gemäss einem der vorhergehenden Ansprüche, mit einem pastösen Kern (2) aus einer wasserbasierten, Zucker und Verdickungsmittel aufweisenden Füllungsmasse (3) und wenigstens einer im Wesentlichen koaxialen Ummantelung aus einer fettbasierten Füllungsmasse (4), wobei die wasserbasierte Füllungsmasse (3) im koextrudierten Süsswarenprodukt eine relative Dichte im Bereich von 70° Brix bis 80° Brix, gemessen bei 20°C, und wenigstens eine Viskosität aufweist, die einer Bostwick-Viskosität von höchstens 3 cm in 20 min. bei 20°C entspricht.

14. Süsswarenprodukt nach Anspruch 13, **dadurch gekennzeichnet, dass** die Ummantelung aus der fettbasierten Füllungsmasse (4) wenigstens eine schokoladenhaltige Umhüllung (5), insbesondere aus dunkler Schokolade, weisser Schokolade oder Milchschokolade aufweist, auf der vorzugsweise zusätzlich entweder
• eine weitere schokoladenhaltige Umhüllung (7), insbesondere aus dunkler Schokolade, weisser Schokolade oder Milchschokolade, oder
• eine stückige Lebensmittelpanade, insbesondere aus Fruchtgranulaten, Nussraspeln, Nusssplittern und/oder Kokosraspeln, oder
• eine stückige Lebensmittelpanade, insbesondere aus Fruchtgranulaten, Nussraspeln, Nusssplittern und/oder Kokosraspeln, und einer umgebenden weiteren schokoladenhaltigen Umhüllung (7), insbesondere aus dunkler Schokolade, weisser Schokolade oder Milchschokolade, aufgebracht ist.

## Claims

1. Method for producing a multilayer confectionery product (1) with a pasty core (2) by coextrusion, **characterized by** the following steps:
a) feeding at least one water-based filling mass (3) containing sugar and thickeners with a relative density in the range from 70° Brix to 85° Brix measured at 20 °C, and at least one fat-based filling mass (4) to a coextruder (10);
b) coextruding the water-based filling mass (3) and the fat-based filling mass (4) by means of the coextruder (10) to form a substantially coaxial continuous strand (11) in which the water-based filling mass (3) forms a pasty core (2) which is encased in the fat-based filling mass (4), wherein the supply to the coextruder (10) and the coextrusion by means of the coextruder (10) are carried out while minimising shear stress effects in such manner that after the coextrusion the water-based filling mass (3) still at least has a viscosity corresponding to a Bostwick viscosity of not more than 3 cm in 20 min. at 20 ° C; wherein minimising the shear stress effects involves feeding the water-based filling mass (3) to the coextruder (10) by means of compressed air and/or by gravity for a first part of a feed path and by means of a pump for a second part of the feed path, and feeding the fat-based filling mass (4) to the coextruder (10) by means of compressed air and/or by gravity for a first part of a feed path and by means of a pump for a second part of the feed path;
c) cooling the continuous strand (11) to stabilise the form of the encasing fat-based filling mass (4) ;
d) dividing the cooled continuous strand (11) into portion units (21) with open cut ends (23) by means of a cutting device (20).

2. Method according to Claim 1, **characterized in that** the cutting device (20) for dividing the endless strand is cleaned by means of ultrasound, in particular after each cutting operation.

3. Method according to any one of the preceding claims, **characterized in that** the continuous strand (11) is extruded onto a conveyor belt (12) whose conveying speed is slower than the extrusion speed of the coextruder (10).

4. Method according to any one of the preceding claims, **characterized in that**
• the fat-based filling mass (4) is preheated to a temperature of 24 °C to 26 °C, in particular of 24.5 °C to 25.5 °C before being fed to the coextruder (10), and/or that
• the water-based filling mass (3) is preheated to a temperature of 25 °C to 28 °C, in particular of 26 °C to 27 °C before being fed to the coextruder (10), preferably to near the temperature of the fat-based filling mass fed to the coextruder (10) .

5. Method according to any one of the preceding claims, **characterized in that** the fat-based filling mass (4) is foamed by means of an inert gas, in particular to a density of 800 g/l to 1000 g/l, before being fed to the coextruder (10).

6. Method according to any one of the preceding claims, **characterized in that** the thickener is a vegetable thickener, particularly containing pectin, or a thickener of animal origin, particularly a thickener containing gelatin.

7. Method according to any one of the preceding claims, further **characterized by** coating of the portion units (21) with at least one chocolate-containing covering (5), particularly a covering of dark chocolate, white chocolate or milk chocolate.

8. Method according to Claim 7, **characterized in that** after coating with the covering (5) at least parts of the portion units (21) are
• covered with a chunky, crunchy edible layer (6), particularly made of fruit granules, grated nuts, nut chips and/or grated coconut, or
• a further chocolate-containing coating (7), particularly a coating of dark chocolate, white chocolate or milk chocolate, or
• a chunky, crunchy edible layer (6), particularly made of fruit granules, grated nuts, nut chips and/or grated coconut, and then covered with another chocolate-containing coating (7), particularly a coating of dark chocolate, white chocolate or milk chocolate.

9. Method according to any one of the preceding claims, **characterized in that** the water-based filling mass (3)
• has a pH between 3.1 and 3.7, and/or
• contains an antioxidant, and/or
• has a fraction by weight of 15-25 wt.% of the finished confectionery product (1) and/or 20-30 wt.% of the coextruded continuous strand (11), and/or
• is designed as a fruit pulp, and/or
• has the flavours of apple, raspberry, strawberry, blackcurrant, acai berry, sour cherry, mango/passion fruit, peach, apricot, orange, lime, cranberry, blueberry, kiwi, banana, prune, caramel, vanilla, antipasti, honey, salt, pepper, mustard, olives, tomatoes, and/or barbecue sauce.

10. Method according to any one of the preceding claims, **characterized in that** the fat-based filling mass (4)
• has a fat content of 40% to 46%, particularly from 41% to 45%, and/or
• is designed as milk cream, nougat paste, cocoa cream, coconut cream, coffee cream, caramel filling, milk caramel filling, marzipan filling paste or marzipan cream, and/or
• is free from non-hydrogenated fats, and/or
• contains fruit pieces, fruit powder, nut chips, biscuit gratings, spices, fruit flavours, fruit extracts, seed powder, seed extracts, salt, vitamins, minerals, caffeine, alcohol, taurine, zinc gluconate, and/or lutein esters.

11. Method according to any one of the preceding claims, **characterized in that** the core (2) from the water-based filling mass (3) has a round, oval, star-shaped, heart-shaped, triangular, rectangular or polygonal cross-section and/or a diameter in the range of at least 5 mm.

12. Method according to any one of the preceding claims, **characterized in that** the confectionery product (1)
• has a length of 25 mm to 175 mm; and/or
• has a mass of 5 g to 50 g; and/or
• has a diameter in the range of 10 mm to 20 mm, and/or
• has a round, oval, star-shaped, heart-shaped, triangular, rectangular or polygonal cross-section.

13. A multilayer, coextruded confectionery product (1) cut into portion units (21) with open cut ends (23), in particular manufactured according to a method as described in any of the preceding claims, with a pasty core (2) made of a water-based filling mass (3) containing sugar and thickeners and at least one substantially coaxial coating consisting of a fat-based filling mass (4), wherein in the coextruded confectionery product the water-based filling mass (3) has a relative density in the range of 70° Brix to 80° Brix, measured at 20 °C, and a viscosity corresponding at least to a Bostwick viscosity of not more than 3 cm in 20 minutes at 20 °C.

14. Confectionery product according to Claim 13, **characterized in that** the encasement of fat-based filling mass (4) has at least one chocolate-containing covering (5), particularly of dark chocolate, white chocolate or milk chocolate, to which is/are added preferably either
• a further chocolate-containing coating (7), particularly of dark chocolate, white chocolate or milk chocolate, or
• a chunky, crunchy edible layer, particularly made of fruit granules, grated nuts, nut chips and/or grated coconut, or
• a chunky, crunchy edible layer, particularly made of fruit granules, grated nuts, nut chips and/or grated coconut, which is then covered with another chocolate-containing coating (7), particularly a coating of dark chocolate, white chocolate or milk chocolate.

## Revendications

1. Procédé pour la fabrication d'un produit de confiserie multicouche (1) avec un noyau pâteux (2) par coextrusion, **caractérisé par** les étapes suivantes :
a) introduction dans une coextrudeuse (10) d'au moins une masse de remplissage (3) à base d'eau comportant du sucre et un épaississant avec une densité relative se situant dans une plage de 70° Brix à 85° Brix, mesurée à 20° C, ainsi qu'au moins une masse de remplissage à base de matières grasses (4),
b) coextrusion de la masse de remplissage à base d'eau (3) et de la masse de remplissage à base de matières grasses (4) au moyen de la coextrudeuse (10) en une barre sans fin (11) pour l'essentiel coaxiale, pour laquelle la masse de remplissage à base d'eau (3) forme un noyau pâteux (2), qui est enveloppé par la masse de remplissage à base de matières grasses (4), l'introduction dans la coextrudeuse (10) et la coextrusion au moyen de la coextrudeuse (10) en minimisant les effets de contrainte de cisaillement ayant lieu de telle manière que la masse de remplissage à base d'eau (3) comporte encore après la coextrusion au moins une viscosité telle qu'elle correspond à une viscosité de Bostwick au maximum de 3 cm par 20 min. à 20° C, la minimisation des effets de contrainte de cisaillement comprenant le fait que la masse de remplissage à base d'eau (3) est introduite dans la coextrudeuse (10) par une première partie d'une trajectoire d'introduction au moyen d'air comprimé et/ou par entraînement par gravité et est introduite par une deuxième partie de la trajectoire d'introduction au moyen d'une pompe et que la masse de remplissage à base de matières grasses (4) est introduite dans la coextrudeuse (10) une première partie d'une trajectoire d'introduction au moyen d'air comprimé et/ou d'entraînement par gravité et est introduite par une deuxième partie de la trajectoire d'introduction au moyen d'une pompe,
c) refroidissement de la barre sans fin (11) pour stabilisation de la forme de la masse de remplissage à base de matières grasses enveloppante (4),
d) mise en portions de la barre sans fin refroidie (11) au moyen d'un dispositif de découpe (20) en unités de portions (21) avec des extrémités de coupe ouvertes (23).

2. Procédé selon la revendication 1, **caractérisé en ce que** le dispositif de découpe (20) pour la mise en portions de la barre sans fin au moyen d'ultrasons est nettoyé en particulier après chaque opération de découpe.

3. Procédé selon l'une quelconque des revendications précédentes, **caractérisé en ce que** la barre sans fin (11) est extrudée sur une bande transporteuse (12) dont la vitesse de transport est plus faible que la vitesse d'extrusion de la coextrudeuse (10).

4. Procédé selon l'une quelconque des revendications précédentes, **caractérisé en ce que**
• la masse de remplissage à base de matières grasses (4) est prétempérée avant l'introduction dans la coextrudeuse (10) à une température de 24°C à 26°C, en particulier de 24,5°C à 25,5°C, et/ou **en ce que**
• la masse de remplissage à base d'eau (3) est prétempérée avant l'introduction dans la coextrudeuse (10) à une température de 25° C à 28° C, en particulier de 26°C à 27°C, de préférence à à peu près la température de la masse de remplissage à base de matières grasses introduite dans la coextrudeuse (10).

5. Procédé selon l'une quelconque des revendications précédentes, **caractérisé en ce que** la masse de remplissage à base de matières grasses (4) est formée en mousse avant l'introduction dans la coextrudeuse (10) au moyen d'un gaz inerte, en particulier à une densité de 800 g/l à 1 000 g/l.

6. Procédé selon l'une quelconque des revendications précédentes, **caractérisé en ce que** l'épaississant est un épaississant végétal, notamment contenant de la pectine ou un épaississant d'origine animale, notamment un épaississant contenant de la gélatine.

7. Procédé selon l'une quelconque des revendications précédentes, **caractérisé par** le recouvrement des unités en portions (21) avec au moins un enrobage contenant du chocolat (5), notamment un enrobage en chocolat noir, chocolat blanc ou chocolat au lait.

8. Procédé selon la revendication 7, **caractérisé en ce que** les unités en portions (21), après revêtement avec l'enveloppe, sont revêtues au moins par zone après revêtement avec l'enrobage (5)
• d'une panure alimentaire (6), notamment en granulés de fruit, ou noix râpée , éclats de noix et/ou noix de coco râpée, ou
• d'un autre enrobage contenant du chocolat (7), notamment d'un enrobage de chocolat noir, de chocolat blanc ou de chocolat au lait, ou
• d'une panure alimentaire en morceaux (6), notamment en granulés de fruit, noix râpée, éclats de noix et/ou noix de coco râpée et ensuite d'un autre enrobage contenant du chocolat (7), notamment d'un enrobage en chocolat noir, chocolat blanc ou chocolat au lait.

9. Procédé selon l'une quelconque des revendications précédentes, **caractérisé en ce que** la masse de remplissage à base d'eau (3)
• comporte une valeur de pH se situant entre 3,1 et 3,7, et/ou
• comporte un antioxydant, et/ou
• a une proportion en poids de 15-25% poids par rapport au produit de confiserie fini (1) et/ou 20-30% poids par rapport à la barre sans fin coextrudée (11), et/ou
• est constituée d'une masse de fruit, et/ou
• comporte les saveurs de pomme, framboise, fraise, cassis, baie d'açaï, de cerise acide, de mangue/fruit de la passion, pêche, abricot, orange, limette, canneberge, myrtille, kiwi, banane, pruneau, caramel, vanille, antipasti, miel, sel, poivre, moutarde, olives, tomates et/ou sauce barbecue.

10. Procédé selon l'une quelconque des revendications précédentes, **caractérisé en ce que** la masse de remplissage à base de matières grasses (4)
• comporte une proportion de matières grasses de 40% à 46%, notamment de 41% à 45%, et/ou
• est constituée de crème de lait, de masse de remplissage de nougat, crème de cacao, crème de coco, crème de café, garniture au caramel, garniture au caramel au lait, de masse de remplissage à la pâte d'amandes ou crème de pâte d'amandes, et/ou
• est exempte de matières grasses molles, et/ou
• comporte des morceaux de fruit, de la poudre de fruit, des éclats de noix, de biscuits râpés, des épices, des arômes de fruit, des extraits de fruit, de la poudre de graines, des extraits de graines, du sel, des vitamines, des substances minérales, de la caféine, de l'alcool, de la taurine, du gluconate de zinc et/ou de l'ester de lutéine.

11. Procédé selon l'une quelconque des revendications précédentes, **caractérisé en ce que** le noyau (2) de la masse de remplissage à base d'eau (3) comporte une section ronde, ovale, en forme d'étoile, en forme de coeur, triangulaire, rectangulaire ou polygonale et/ou un diamètre se situant dans une plage d'au moins 5 mm.

12. Procédé selon l'une quelconque des revendications précédentes, **caractérisé en ce que** le produit de confiserie (1)
• comporte une longueur de 25 mm à 175 mm, et/ou
• comporte une masse de 5 g à 50 g, et/ou
• comporte un diamètre se situant dans une plage de 10 mm à 20 mm, et/ou
• comporte une section ronde, ovale, en forme d'étoile, en forme de coeur, triangulaire, rectangulaire ou polygonale.

13. Produit de confiserie (1) multicouches coextrudées découpé en unités en portions (21) avec des extrémités coupées ouvertes (23), en particulier fabriqué selon un procédé selon l'une quelconque des revendications précédentes, avec un noyau pâteux (2) composé d'une masse de remplissage (3) à base d'eau, de sucre et comportant un épaississant et au moins un enrobage pour l'essentiel coaxial composé d'une masse de remplissage à base de matières grasses (4), la masse de remplissage à base d'eau (3) dans le produit de confiserie coextrudé comportant une densité relative se situant dans une plage de 70° Brix à 80° Brix, mesurée à 20°C et au moins une viscosité qui correspond à une viscosité Bostwick au maximum de 3 cm par 20 min. à 20° C.

14. Produit de confiserie selon la revendication 13, **caractérisé en ce que** l'enrobage de masse de remplissage à base de matières grasses (4) comporte au moins un enrobage contenant du chocolat (5), en particulier de chocolat noir, de chocolat blanc ou de chocolat au lait, sur lequel est appliqué en plus de préférence soit
• un autre enrobage contenant du chocolat (7), notamment de chocolat noir, de chocolat blanc ou de chocolat au lait, ou
• une panure alimentaire en morceaux, en particulier de granulés de fruit, de noix râpée, d'éclats de noix et/ou de noix de coco râpée, ou
• une panure alimentaire en morceaux, en particulier en granulés de fruit, en noix râpée, en éclats de noix et/ou noix de coco râpée et un autre enrobage enveloppant contenant du chocolat (7), en particulier en chocolat noir, chocolat blanc ou en chocolat au lait.
